# EUROPEAN PATENT SPECIFICATION

(11) **EP 2 352 705 B1**
(45) Date of publication and mention of the grant of the patent: **24.01.2018**
(21) Application number: 09756040.3
(22) Date of filing: 06.10.2009
(51) Int. Cl.: C02F 1/66, C02F 1/52, C02F 103/34, C02F 103/12

(54) **APPARATUS AND METHOD FOR TREATING ALKALINE WATER**
VORRICHTUNG UND VERFAHREN ZUR BEHANDLUNG VON ALKALISCHEM WASSER
APPAREIL ET PROCÉDÉ POUR TRAITER L EAU ALCALINE

(30) Priority: 06.10.2008 GB 0818263
(43) Date of publication of application: 10.08.2011
(73) Proprietor: Siltbuster Limited, Monmouthshire NP25 5JA (GB)
(72) Inventor: COULTON, Richard, Henry, Chepstow NP16 6RH (GB)
(74) Representative: Abel & Imray
(86) International application number: PCT/GB2009/002385
(87) International publication number: WO 2010/040999

(56) References cited:
- GB-A- 2 398 519
- JP-A- 4 310 285
- JP-A- 10 174 979
- JP-A- 53 015 261
- JP-A- 2003 001 273
- JP-A- 2009 136 862
- US-A1- 2007 170 119

## Description

This invention relates to an apparatus and method for treating alkaline water. Such water may be generated by a variety of industrial processes and the present invention may therefore have a wide variety of applications. The invention is particularly, but not exclusively, concerned with alkaline waste water generated in the construction industry where in particular concrete batching plants generate alkaline waste water.

A traditional technique for reducing the pH of waste water in the construction industry is to simply add acid to the water. Such a technique is effective but requires acid to be stored on site and requires that the correct amount of acid is added. Consequently, for health and safety reasons, the use of carbon dioxide has attractions.

JP 04 310285 A describes an apparatus for subjecting lime to treatment by carbon dioxide. The lime and water in which it is not dissolved is fed into a reaction tank to which carbon dioxide is also fed. A separated liquid is transferred from the reaction tank into a neutralising tank into which carbon dioxide is also fed. Water from the neutralising tank can be discharged and calcium carbonate formed in the reaction tank is withdrawn to be reutilised.

JP 2003 001273 A describes a method of neutralising alkaline water using flue gas as a source of carbon dioxide. Two neutralisation tanks are provided and a settling tank may also be provided. Water flows from the first neutralisation tank to the second neutralisation tank and may then be fed to a settling tank. The method employs an economical source of carbon dioxide and is used in factories discharging a lot of high alkali waste water.

Providing a practical and economic system that can be provided at a construction site and that reliably produces clear water after treatment with carbon dioxide has, however, proved difficult.

According to the invention there is provided a method of treating alkaline water, the method comprising the following steps:
a) introducing alkaline water into a first compartment;
b) bubbling carbon dioxide into the water in the first compartment, causing solids to precipitate;
c) transferring water with solids that have precipitated into a second compartment;
d) separating, in a second compartment, solids that have precipitated from the water and removing solids separated in the second compartment from a bottom region of the compartment;
e) transferring water from which solids have been separated to a third compartment;
f) bubbling carbon dioxide into the water in the third compartment to reduce the pH of the water; and
g) removing water from the third compartment, the pH of the water removed from the third compartment being lower than the pH of the water in the second compartment,
wherein the first, second and third compartments are provided in a single portable unit, and the second compartment contains a multiplicity of inclined plates defining a multiplicity of channels therebetween, the water flowing upwardly along the channels and solids passing down the channels towards the bottom of the compartment.

In accordance with the invention more than one stage of carbon dioxide treatment is undertaken. In a first stage solids are caused to be precipitated and at least some of those solids are then removed from the water before the second stage of treatment. By adopting this approach, it is possible to obtain a much more consistent end product of clear water. The use of the inclined plates in the second compartment is a particularly effective way of separating calcium carbonate precipitate from the water.

Where reference is made in this specification to carbon dioxide, it should be understood that the gas referred to will contain a substantial amount of carbon dioxide, but may also have other components. Preferably at least 90 per cent by volume of the gas would be carbon dioxide.

There is preferably a reduction in pH of the alkaline water in the first compartment but that reduction is only part of the overall reduction. Precipitation of solids, typically precipitation of calcium carbonate, occurs in the first compartment. The pH of the water transferred into the second compartment is preferably in the range of 9.5 to 11.5. In an embodiment of the invention described below, the target pH of the water transferred is 10.

The treatment of the water in the third compartment preferably reduces the pH to an approximately neutral value. In the third compartment any calcium carbonate present tends to form soluble calcium bicarbonate, thereby causing the water to clear. Preferably the pH of water removed from the third compartment is in the range of 6 to 8. In an embodiment of the invention described below, the pH is about 7. It may be noted that adding excess carbon dioxide to the calcium bicarbonate would not result in a dangerous reduction in pH.

Preferably in step b) and/or step f) carbon dioxide is introduced into a lower region of the first compartment and preferably at a multiplicity of locations extending across at least part of the compartment. By introducing the carbon dioxide at a multiplicity of locations, a better mixing of the carbon dioxide with the water in the first compartment can be obtained. The introduction at a multiplicity of locations may for example be achieved by a sparging arrangement as described below with reference to the drawings or by providing a hollow member into which carbon dioxide is fed and which has a multiplicity of openings across its surface.

A moving part, preferably a rotating part, is preferably provided in the first and/or third compartment for breaking up bubbles of carbon dioxide introduced at the multiplicity of locations. Again this promotes the dissolving of the carbon dioxide in the water. The rotating part preferably includes a plurality of members extending outwardly from the axis of rotation of the part. The members may comprise radially extending paddles.

The water to be treated is preferably introduced into a mid-height region of the first compartment.

Solids separated in the second compartment are removed from a bottom region of the compartment. The second compartment may have sloping sides in its bottom region and solids may be collected from a lowermost part of the second compartment at the bottom of the sloping sides.

Preferably some of the solids removed from the second compartment are introduced into the first compartment, preferably into a lower region of the compartment. Such solids can promote the precipitation that is desired to take place in the first compartment.

Preferably water flows from an upper region of the first compartment into an upper region of the second compartment. Water entering the upper region of the second compartment preferably flows downwardly towards the bottom of the compartment and then upwardly. Where a multiplicity of inclined plates are provided, the upward flow is preferably between the inclined plates. Water preferably flows into an upper region of the third compartment, preferably from an upper portion of the second compartment and preferably directly from the second compartment. Preferably water flows into the third compartment over a weir whose height is adjustable. The facility to adjust the height of the weir is of particular value when the method is carried out in a portable unit which may rest on sloping ground. The weir may have a serrated edge.

Water is preferably removed from the third compartment through an outlet in a mid-height region of the third compartment. Such water is preferably suitable for ordinary discharge, but, if desired or necessary, further treatments may of course be carried out.

Preferably the pH of the water in one or more compartments is monitored and the rate at which carbon dioxide is bubbled into the water in step b) and/or step f) is controlled by the monitoring.

The single portable unit preferably has a length of less than 5 m and/or a height of less than 3.0 m and/or a width of less than 2.0 m. Such a unit, although of significant size, can be transported on a vehicle from one construction site to another.

As already indicated, the invention is particularly, but not exclusively, concerned with the case where the alkaline water is waste water and in particular waste water produced from concrete batching.

According to the invention there is also provided an apparatus for treating alkaline water, the apparatus comprising:
a) a first compartment for receiving water;
b) means for bubbling gas into the water in the first compartment;
c) a second compartment for allowing settling of solids that have precipitated;
d) a third compartment;
e) means for bubbling gas into the water in the third compartment; and
f) an outlet in the third compartment for removing water from the third compartment;
characterised in that the first, second and third compartments are all provided in a single portable unit, in that the second compartment is arranged to receive water from the first compartment, in that separating means are in the second compartment for separating solids that have precipitated from the water, the separating means comprising a multiplicity of inclined plates defining a multiplicity of channels therebetween, and in that the third compartment is arranged to receive water from the second compartment.

The means for bubbling gas into the water in the first and/or the third compartments is preferably located in a lower region of the compartment and preferably provides a multiplicity of locations extending across at least part of the compartment at which bubbles are introduced. The multiplicity of locations are preferably provided around a peripheral edge of a member extending across at least part of the compartment, but may be provided by apertures distributed across a surface of a hollow member.

A rotatable part is preferably mounted in the first and/or third compartment for breaking up bubbles of gas introduced into the compartment and drive means are preferably provided for rotating the rotatable part. The rotatable part preferably includes a plurality of members extending outwardly from the axis of rotation of the part. Preferably the axis of rotation of the rotatable part is approximately vertical. A solids outlet for removing solids from the second compartment is preferably provided in a bottom region of the compartment. The second compartment preferably contains a multiplicity of inclined plates defining a multiplicity of channels therebetween. Preferably the plates are substantially parallel to one another.

Preferably a water flow path is provided between an upper region of the first compartment and an upper region of the second compartment. Preferably a water flow channel is defined in the second compartment providing a flow path for water entering the second compartment from the first compartment down from the upper region of the second compartment to a lower region of the second compartment.

A water flow path is preferably provided from the second compartment into an upper region of the third compartment. A height adjustable weir is preferably provided in the water flow path into the upper region of the third compartment.

Preferably the first, second and third compartments are all provided in a single portable unit. The first, second and third compartments are preferably side by side with the second compartment positioned between the first and third compartments. Whilst it is preferred to have only three compartments, it is within the scope of the invention to have one or more additional compartments which may be upstream of the first compartment and/or downstream of the third compartment and/or interposed between the compartments.

Certain features of the invention have been described above only with reference to the method of the invention whilst other features have been described only with reference to the apparatus of the invention. It should be understood that a feature described in respect of the method may be represented also in a feature of the apparatus and vice versa.

By way of example, an apparatus and method for treating alkaline water will now be described with reference to the accompanying drawings of which:
- Fig. 1: is an isometric view of a portable unit for treating alkaline water; and
- Fig. 2: is an isometric view of the unit of Fig. 1 with some parts of the unit cut away to show internal constructional details of the unit.

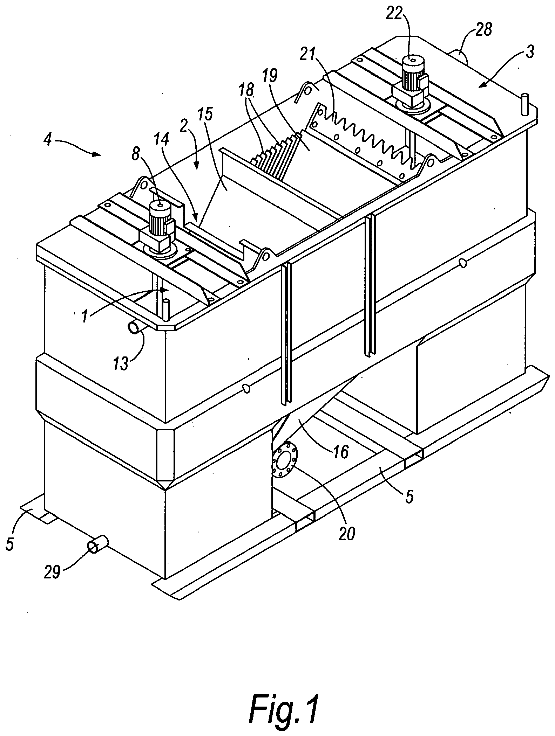

The, portable unit shown in the drawings and generally indicated by reference numeral 4 has a first compartment 1, a second compartment 2 and a third compartment 3. A dividing wall 12 is provided between compartments 1 and 2 and a dividing wall 23 between compartments 2 and 3. As shown in Fig. 1, the unit also has end walls and side walls but has a generally open top. The unit is mounted on a pair of skids 5 which rest on the ground on which it is placed. The unit is of generally cuboidal shape and in one particular example has a length of about 3.8m, a height of about 3m and a width of about 2 m.

In the bottom region of the first compartment, a sparging arrangement 6 is provided and a gas pipe 7 is provided to enable gas to be supplied to it. The sparging arrangement comprises a gas outlet immediately above which is a dish-shaped member having a serrated downwardly inclined edge. Gas from the outlet passes around the serrated edge and is broken into bubbles as it does so. Mounted on the top of the compartment 1 is a motor 8 which drives a vertical shaft 9 on the bottom of which paddles 10 are mounted. Partway along the length of the shaft 9, vanes 11 extend from the shaft. On the end of the unit, adjacent to the compartment 1 and communicating with the compartment 1, a pipe 13 is provided. A part of the dividing wall 12 is of reduced height to create a weir 14 over the top of the dividing wall 12 into the second compartment 2.

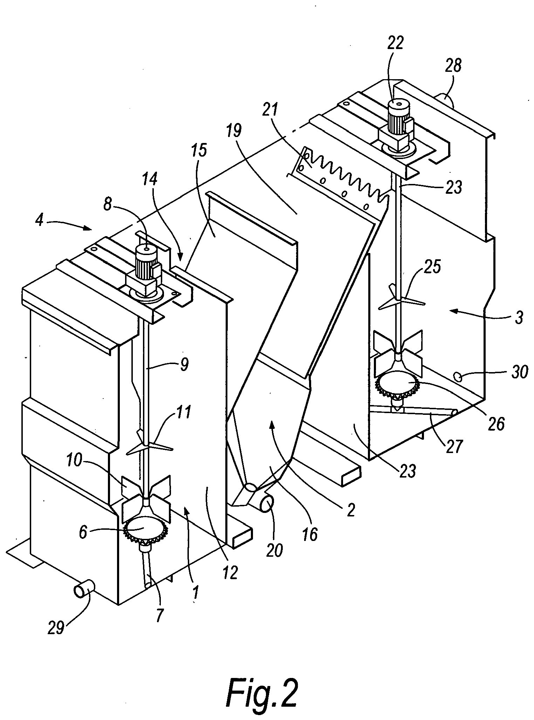

Within the second compartment 2 an inclined partition 15 is provided which prevents water entering the compartment 2 from passing anywhere other than downwards through a channel between a bottom edge (not visible) of the inclined partition 15 and the dividing wall 12. As can be seen from Fig.1, the inclined partition 15 is the first of a multiplicity of parallel inclined plates 18 which end in an inclined plate 19. In Fig. 2 only the partition 15 and the end plate 19 are shown but in Fig. 1 small portions of the intermediate inclined plates can be seen. Below the inclined plates 18, walls 16 of the compartment slope downwardly and inwardly in the manner of a hopper and an outlet 20 for removing solids from the compartment 2 is provided at the bottom of the hopper. As can be seen from the drawings, there is a free external space provided below the compartment 2 around the sloping walls of the lower portion of the compartment.

At the top of the inclined wall 19, a height adjustable weir 21 having a serrated edge is provided. That defines a water outlet from the second compartment directly into the third compartment. Like the first compartment, the third compartment has a motor 22 mounted over the top of the compartment with a vertical shaft 23 carrying paddles 24 and vanes 25. Also a sparging arrangement 26 and feed pipe 27 are provided in the bottom of the compartment 3. A water outlet 28 is provided at the top of the compartment 3, from which water treated by the unit is removed.

Also shown in the drawings is a pipe 29 communicating with the bottom of the first compartment 1 and an outlet 30 at the bottom of the third compartment 3. The pipe 29, outlet 30 and the solids outlet 20 may be used to drain the unit.

In use of the apparatus, water enters the first compartment 1 through the pipe 13 and passes down a pipe (not shown) which extends down into the compartment 1 from above to about the middle height of the compartment and carbon dioxide is introduced into the compartment 1 through the sparging arrangement 6. The paddles 10 and the vanes 11 are rotated on the shaft 9 by the motor 8 breaking up the bubbles of carbon dioxide rising from the sparging arrangement 6. The carbon dioxide dissolves in the water before it reaches the surface of the water.

The carbon dioxide reacts with the alkaline water to create calcium carbonate, which is insoluble and precipitates out of the water. The pH of the alkaline water is reduced in compartment 1 so that water leaving the compartment over the weir 14 into the second compartment 2 has a pH of about 10.

Water entering the second compartment 2 is forced to travel downwardly to a lower region of the compartment, around the lower edge of the inclined partition 15 and then flows upwardly between the inclined plates 18. The speed of the water flow reduces considerably as it travels up between the inclined plates because of the cross sectional area provided between all the plates. Solids in the water fall slowly down the inclined plates and are collected at the bottom of the second compartment at the solids outlet 20. The water flows upwardly between the plates and over the weir 21 into the third compartment 3. In the third compartment carbon dioxide is introduced through the sparging arrangement 26 and the paddles 24 and the vanes 25, rotated on the shaft 23 by the motor 22, break up the bubbles of carbon dioxide sufficiently that they dissolve in the water before reaching the surface. The carbon dioxide converts remaining calcium carbonate to soluble calcium bicarbonate and further reduces the pH of the water from about 10 to about 7. Water from the third compartment 3 is removed from the unit through the water outlet 28. A down-pipe (not shown) extends from the outlet 28 down to about the middle height of the compartment 3 so that water being removed is taken from the middle of the compartment.

Solids are removed at intervals through the outlet 20 and passed to a 3 way valve (not shown) which is set either to return the solids to the first compartment 1 or to remove them as waste. A control system is provided which monitors the pH in the apparatus and controls the rate at which carbon dioxide is added in the apparatus. The control system may also control operation of the 3 way valve and/or other parts of the apparatus.

## Claims

1. A method of treating alkaline water, the method comprising the following steps:
a) introducing water into a first compartment (1);
b) bubbling carbon dioxide into the water in the first compartment (1), causing solids to precipitate;
c) transferring water with solids that have precipitated into a second compartment (2);
d) separating, in the second compartment (2), solids that have precipitated from the water and removing solids separated in the second compartment (2) from a bottom region of the compartment (2);
e) transferring water from which solids have been separated to a third compartment (3);
f) bubbling carbon dioxide into the water in the third compartment (3) to reduce the pH of the water; and
g) removing water from the third compartment (3), the pH of the water removed from the third compartment (3) being lower than the pH of the water in the second compartment (2);
wherein the first, second and third compartments are provided in a single portable unit (4), and the second compartment (2) contains a multiplicity of inclined plates (18) defining a multiplicity of channels therebetween, the water flowing upwardly along the channels and solids passing down the channels towards the bottom of the compartment (2).

2. A method according to claim 1, in which the pH of the water transferred into the second compartment (2) is in the range of 9.5 to 11.5.

3. A method according to claim 1 or 2, in which the pH of water removed from the third compartment (3) is in the range of 6 to 8.

4. A method according to any preceding claim, in which in step b) and/or step f) carbon dioxide is introduced through a multiplicity of inlets extending across at least part of the compartment.

5. A method according to any preceding claim, in which in step b) and/or step f) a rotating part is provided in the compartment for breaking up bubbles of carbon dioxide introduced into the compartment.

6. A method according to any preceding claim, in which some of the solids removed from the second compartment (2) are introduced into the first compartment (1).

7. A method according to any preceding claim, in which water flows from an upper region of the first compartment (1) into an upper region of the second compartment (2), water entering the upper region of the second compartment (2) flows downwardly towards the bottom of the compartment and then upwardly, and water flows into an upper region of the third compartment (3).

8. A method according to claim 7, in which water flows into the third compartment (3) over a weir (21) whose height is adjustable.

9. A method according to any preceding claim, in which water is removed from the third compartment (3) through an outlet (28) in a mid-height region of the third compartment.

10. A method according to any preceding claim in which the alkaline water is waste water produced from concrete batching.

11. An apparatus for treating alkaline water, the apparatus comprising:
a) a first compartment (1) for receiving water;
b) means (6,7) for bubbling gas into the waste water in the first compartment (1);
c) a second compartment (2) for allowing settling of solids that have precipitated;
d) a third compartment (3);
e) means for bubbling gas into the water in the third compartment (3); and
f) an outlet in the third compartment (3) for removing water from the third compartment;
**characterised in that** the first, second and third compartments are all provided in a single portable unit (4), **in that** the second compartment (2) is arranged to receive water from the first compartment (1), **in that** separating means are in the second compartment (2) for separating solids that have precipitated from the water, the separating means comprising a multiplicity of inclined plates (18) defining a multiplicity of channels therebetween, and **in that** the third compartment (3) is arranged to receive water from the second compartment (2).

12. An apparatus according to claim 11, in which the means (6,7) for bubbling gas into the water in the first and/or the third compartments (1,3) provides a multiplicity of locations extending across at least part of the compartment at which bubbles are introduced.

13. An apparatus according to claim 11 or claim 12, in which a water flow path is provided between an upper region of the first compartment (1) and an upper region of the second compartment (2), a water flow channel is defined in the second compartment providing a flow path for water entering the second compartment (2) from the first compartment (1) down from the upper region of the second compartment (2) to a lower region of the second compartment (2), and a water flow path is provided from the second compartment (2) into an upper region of the third compartment (3).

14. An apparatus according to claim 13, in which the first, second and third compartments (1,2,3) are side by side with the second compartment (2) positioned between the first and third compartments (1,3).

## Patentansprüche

1. Verfahren zum Behandeln von alkalischem Wasser, wobei das Verfahren die folgenden Schritte umfasst:
a) Einführen von Wasser in eine erste Kammer (1);
b) Sprudeln von Kohlenstoffdioxid in das Wasser in der ersten Kammer (1), bewirkend, dass sich Feststoffe abscheiden;
c) Weiterleiten von Wasser mit Feststoffen, die abgeschieden worden sind, in eine zweite Kammer (2);
d) Trennen in der zweiten Kammer (2) von Feststoffen, die abgeschieden worden sind, von dem Wasser und Entfernen von getrennten Feststoffen in der zweiten Kammer (2) aus einem unteren Bereich der Kammer (2);
e) Weiterleiten von Wasser, von dem Feststoffe getrennt wurden, in eine dritte Kammer (3);
f) Sprudeln von Kohlenstoffdioxid in das Wasser in der dritten Kammer (3), um den pH-Wert des Wassers zu verringern; und
g) Entfernen von Wasser aus der dritten Kammer (3), wobei der pH-Wert des aus der dritten Kammer (3) entfernten Wassers kleiner als der pH-Wert des Wassers in der zweiten Kammer (2) ist;
wobei die erste, die zweite und die dritte Kammer in einer einzigen tragbaren Einheit (4) vorgesehen sind und die zweite Kammer (2) eine Vielzahl von geneigten Platten (18) enthält, die eine Vielzahl von Kanälen zwischen ihnen definieren, wobei das Wasser entlang der Kanäle nach oben fließt und Feststoffe die Kanäle hinunter in Richtung des Bodens der Kammer (2) weitergegeben werden.

2. Verfahren nach Anspruch 1, wobei der pH-Wert des in die zweite Kammer (2) weitergeleiteten Wassers im Bereich von 9,5 bis 11,5 liegt.

3. Verfahren nach Anspruch 1 oder 2, wobei der pH-Wert des aus der dritten Kammer (3) entfernten Wassers im Bereich von 6 bis 8 liegt.

4. Verfahren nach einem vorhergehenden Anspruch, wobei in Schritt b) und/oder Schritt f) Kohlenstoffdioxid durch eine Vielzahl von Einlässen, die sich zumindest über einen Teil der Kammer erstrecken, eingeführt wird.

5. Verfahren nach einem vorhergehenden Anspruch, wobei in Schritt b) und/oder Schritt f) ein sich drehendes Teil in der Kammer vorgesehen ist, um in die Kammer eingeführte Bläschen von Kohlenstoffdioxid zu zerschlagen.

6. Verfahren nach einem vorhergehenden Anspruch, wobei einige der aus der zweiten Kammer (2) entfernten Feststoffe in die erste Kammer (1) eingeführt werden.

7. Verfahren nach einem vorhergehenden Anspruch, wobei Wasser von einem oberen Bereich der ersten Kammer (1) in einen oberen Bereich der zweiten Kammer (2) fließt, wobei Wasser, das in den oberen Bereich der zweiten Kammer (2) eintritt, nach unten in Richtung des Bodens der Kammer und dann nach oben fließt, und Wasser in einen oberen Bereich der dritten Kammer (3) fließt.

8. Verfahren nach Anspruch 7, wobei Wasser über eine Stauanlage (21), deren Höhe einstellbar ist, in die dritte Kammer (3) fließt.

9. Verfahren nach einem vorhergehenden Anspruch, wobei Wasser aus der dritten Kammer (3) durch einen Auslass (28) in einem Bereich mittlerer Höhe der dritten Kammer entfernt wird.

10. Verfahren nach einem vorhergehenden Anspruch, wobei das alkalische Wasser Abwasser ist, das beim Betonmischen erzeugt wird.

11. Vorrichtung zum Behandeln von alkalischem Wasser, wobei die Vorrichtung umfasst:
a) eine erste Kammer (1) zum Empfangen von Wasser;
b) Mittel (6, 7) zum Sprudeln von Gas in das Abwasser in der ersten Kammer (1);
c) eine zweite Kammer (2), um ein Setzen der Feststoffe, die abgeschieden worden sind, zu ermöglichen;
d) eine dritte Kammer (3);
e) Mittel zum Sprudeln von Gas in das Wasser in der dritten Kammer (3); und
f) einen Auslass in der dritten Kammer (3) zum Entfernen von Wasser aus der dritten Kammer;
**dadurch gekennzeichnet, dass** die erste, die zweite und die dritte Kammer alle in einer einzigen tragbaren Einheit (4) vorgesehen sind, dass die zweite Kammer (2) ausgelegt ist, Wasser von der ersten Kammer (1) aufzunehmen, dass Trennmittel zum Trennen von Feststoffen, die von dem Wasser abgeschieden worden sind, in der zweiten Kammer sind (2), wobei die Trennmittel eine Vielzahl von geneigten Platten (18) umfassen, die eine Vielzahl von Kanälen zwischen ihnen definieren, und dass die dritte Kammer (3) ausgelegt ist, Wasser von der zweiten Kammer (2) aufzunehmen.

12. Vorrichtung nach Anspruch 11, wobei die Mittel (6, 7) zum Sprudeln von Gas in das Wasser in der ersten und/oder der dritten Kammer (1, 3) eine Vielzahl von Orten liefert, die sich zumindest über einen Teil der Kammer erstrecken, an dem Bläschen eingeführt werden.

13. Vorrichtung nach Anspruch 11 oder Anspruch 12, wobei ein Wasserströmungsweg zwischen einem oberen Bereich der ersten Kammer (1) und einem oberen Bereich der zweiten Kammer (2) vorgesehen ist, ein Wasserströmungskanal in der zweiten Kammer definiert ist, der einen Strömungsweg für Wasser, das von der ersten Kammer (1) in die zweite Kammer (2) eintritt, herunter von dem oberen Bereich der zweiten Kammer (2) zu einem unteren Bereich der zweiten Kammer (2) liefert, und ein Wasserströmungsweg von der zweiten Kammer (2) in einen oberen Bereich der dritten Kammer (3) vorgesehen ist.

14. Vorrichtung nach Anspruch 13, wobei die erste, die zweite und die dritte Kammer (1, 2, 3) aneinander angrenzen, wobei die zweite Kammer (2) zwischen der ersten und der dritten Kammer (1, 3) positioniert ist.

## Revendications

1. Procédé pour traiter l'eau alcaline, le procédé comprenant les étapes suivantes :
a) introduction d'eau dans un premier compartiment (1),
b) barbotage du dioxyde de carbone dans l'eau, dans le premier compartiment (1), entraînant la précipitation des solides,
c) transfert de l'eau avec les solides qui ont précipité dans un deuxième compartiment (2),
d) séparation, dans le deuxième compartiment (2) des solides qui ont précipité, de l'eau, et retrait des solides séparés dans le deuxième compartiment (2) d'une région inférieure du compartiment (2) ;
e) transfert de l'eau de laquelle les solides ont été séparés, dans un troisième compartiment (3),
f) barbotage du dioxyde de carbone dans l'eau, dans le troisième compartiment (3), pour réduire le pH de l'eau et
g) retrait de l'eau du troisième compartiment (3), le pH de l'eau retirée du troisième compartiment (3) étant inférieur au pH de l'eau dans le second compartiment (2),
dans lequel le premier, le deuxième et le troisième compartiments sont disposés dans une seule unité portable (4), et le deuxième compartiment (2) contient une multiplicité de plaques inclinées (18) définissant une multiplicité de canaux entre elles, l'eau s'écoulant par le haut le long des canaux et les solides descendant dans les canaux vers la partie inférieure du compartiment (2).

2. Procédé selon la revendication 1, dans lequel le pH de l'eau transférée dans le second compartiment (2) se situe dans la plage de 9,5 à 11,5.

3. Procédé selon la revendication 1 ou 2, dans lequel le pH de l'eau retirée du troisième compartiment (3) se situe dans la plage de 6 à 8.

4. Procédé selon l'une quelconque des revendications précédentes, dans lequel, à l'étape b) et/ou à l'étape f), le dioxyde de carbone est introduit par une multiplicité d'entrées s'étendant à travers au moins une partie du compartiment.

5. Procédé selon l'une quelconque des revendications précédentes, dans lequel, à l'étape b) et/ou à l'étape f), une partie tournante est disposée dans le compartiment pour rompre les bulles de dioxyde de carbone introduites dans le compartiment.

6. Procédé selon l'une quelconque des revendications précédentes, dans lequel certains des solides retirés du deuxième compartiment (2) sont introduits dans le premier compartiment (1).

7. Procédé selon l'une quelconque des revendications précédentes, dans lequel l'eau s'écoule à partir d'une région supérieure du premier compartiment (1) dans une région supérieure du deuxième compartiment (2), l'eau entrant dans la région supérieure du deuxième compartiment (2) s'écoule vers le bas, en direction de la partie inférieure du compartiment, puis vers le haut, et l'eau s'écoule dans une région supérieure du troisième compartiment (3).

8. Procédé selon la revendication 7, dans lequel l'eau s'écoule dans le troisième compartiment (3) sur un déversoir (21) dont la hauteur est réglable.

9. Procédé selon l'une quelconque des revendications précédentes, dans lequel l'eau est retirée du troisième compartiment (3) par une sortie (28) dans une région placée à mi-hauteur du troisième compartiment.

10. Procédé selon l'une quelconque des revendications précédentes, dans lequel l'eau alcaline est de l'eau usée produite par une centrale à béton.

11. Appareil pour traiter l'eau alcaline, l'appareil comprenant :
a) un premier compartiment (1) pour recevoir l'eau,
b) des moyens (6, 7) pour faire barboter du gaz dans l'eau usée, dans le premier compartiment (1),
c) un deuxième compartiment (2) pour permettre le dépôt des solides qui ont précipité,
d) un troisième compartiment (3),
e) un moyen pour faire barboter du gaz dans l'eau, dans le troisième compartiment (3),
f) une sortie dans la troisième compartiment (3) pour retirer l'eau du troisième compartiment,
**caractérisé en ce que** le premier, le deuxième et le troisième compartiments sont disposés dans une seule unité portable (4), **en ce que** le deuxième compartiment (2) est agencé pour recevoir l'eau du premier compartiment (1), **en ce que** les moyens de séparation se trouvent dans le deuxième compartiment (2) pour séparer les solides qui ont précipité de l'eau, les moyens de séparation comprenant une multiplicité de plaques inclinées (18) définissant une multiplicité de canaux entre elles et **en ce que** l'eau le troisième compartiment (3) est agencé pour recevoir l'eau du deuxième compartiment (2).

12. Appareil selon la revendication 11, dans lequel les moyens (6, 7) pour faire barboter du gaz dans le premier et / ou le troisième compartiments (1, 3) fournissent une multiplicité de positions s'étendant à travers au moins une partie du compartiment dans laquelle les bulles sont introduites.

13. Appareil selon la revendication 11 ou la revendication 12, dans lequel un trajet d'écoulement de l'eau est formé entre une région supérieure du premier compartiment (1) et une région supérieure du deuxième compartiment (2), un canal d'écoulement de l'eau est défini dans le deuxième compartiment formant un trajet d'écoulement pour l'entrée de l'eau dans le deuxième compartiment (2) à partir du premier compartiment (1), vers le bas, à partir de la région supérieure du deuxième compartiment (2) vers une région inférieure du deuxième compartiment (2), et un trajet d'écoulement de l'eau est formé à partir du deuxième compartiment (2) dans une région supérieure du troisième compartiment (3).

14. Appareil selon la revendication 13, dans lequel le premier, le deuxième et le troisième compartiments (1, 2, 3) sont parallèles au deuxième compartiment (2) positionné entre le premier et le deuxième compartiments (1, 3).
